# EUROPEAN PATENT APPLICATION

(11) **EP 3 366 107 A1**
(43) Date of publication of application: **29.08.2018**
(21) Application number: 18158398.0
(22) Date of filing: 23.02.2018
(51) Int. Cl.: A01D 46/30, B25J 9/16

(54) **HARVESTING EQUIPMENT AND HARVEST METHOD**

(30) Priority: 23.02.2017 JP 2017032607
(71) Applicant: Panasonic Corporation, Osaka 571-8501 (JP)
(72) Inventor: KANEDA, Masaaki, Osaka, 540-6207 (JP); KAWANO, Hajime, Osaka, 540-6207 (JP); OKAMOTO, Tamao, Osaka, 540-6207 (JP)
(74) Representative: Eisenführ Speiser

(57) **Abstract**

Harvesting equipment includes: a fruit-picking hand (1); an arm (4) that moves the fruit-picking hand (1) into a vegetation; a torque sensor (23) that detects a magnitude and a direction of a load exerted on the fruit-picking hand (1) or the arm (4); and a control section that detects occurrence of an interference between the fruit-picking hand (1) or the arm (4) and the vegetation and a direction of the interference based on the magnitude and the direction of the load detected by the detection section, and performs a control for eliminating the interference.

## Description

### Cross Reference to Related Applications

The present application claims priority from Japanese applications JP 2017-032607 filed on Feb. 23, 2017, the content of which is hereby incorporated by reference into this application.

### Technical Field

The present invention relates to harvesting equipment that harvests fruits of vegetables or fruits and the like, and a harvest method.

### Background Art

In recent years, there is a demand for automation of harvesting work for field crops. For example, PTL 1 discloses harvesting equipment for automatic harvesting.

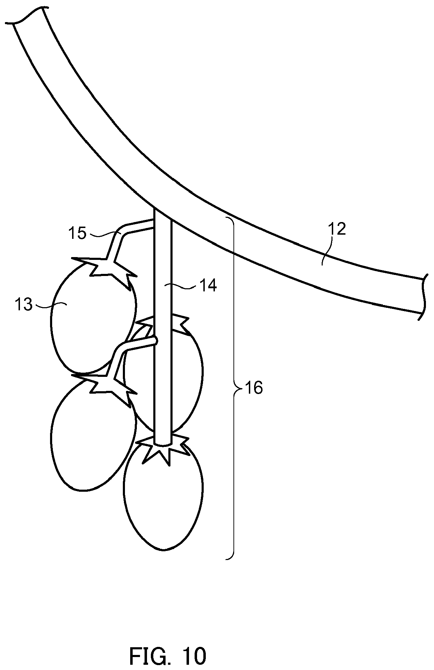

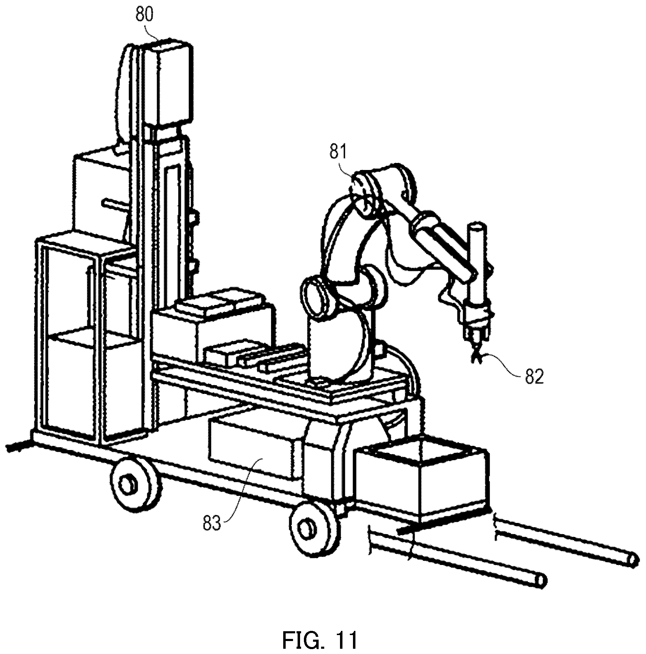

FIG. 10 is a schematic view of a bearing state of a common tomato. FIG. 11 schematically illustrates a configuration of a main part of conventional harvesting equipment 80 disclosed in PTL 1.

When harvesting fruit 13 from fruit bunch 16 hanging from main stem 12 in a culturing ridge, conventional harvesting equipment 80 extends manipulator 81 into fruit bunch 16, and cuts sub-peduncle 15 with fruit-harvesting shear 82 disposed at an end of manipulator 81. Accordingly, manipulator 81 and/or fruit-harvesting shear 82 might interfere with main stem 12, fruits which are not the harvesting object, and the like.

For example, at the time of moving travelling vehicle 83, moving fruit-harvesting shear 82 to the next fruit harvesting position, and/or resetting manipulator 81 to the home position upon completion of a harvesting operation, manipulator 81 and/or fruit-harvesting shear 82 failing to avoid main stem 12, fruit 13, and/or fruit bunch 16 might be caught at main stem 12, fruit 13, and/or fruit bunch 16, thus damaging the vegetation by cutting main stem 12, scratching fruit 13 and/or the like.

In view of this, when the interference occurs, it is necessary to detect the interference and immediately stop the operation of the harvesting equipment so as to ensure the safety of the vegetation.

For example, PTL 2 discloses equipment that detects the interference between the equipment and the hindrance and stops the operation.

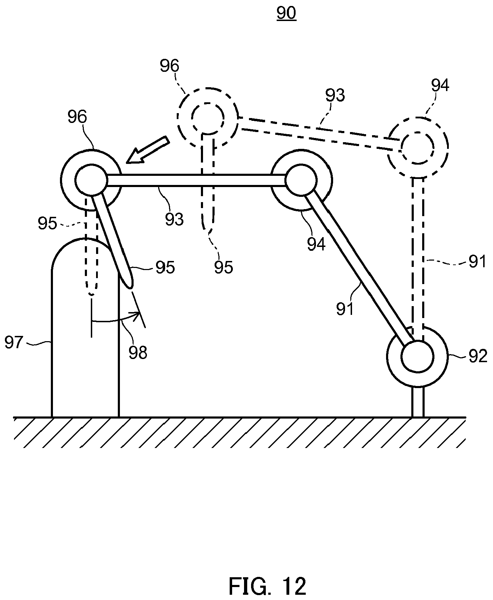

FIG. 12 is a schematic view of equipment 90 having a simplified structure with three joints (first joint 92, second joint 94 and third joint 96), and three links (first link 91, second link 93 and third link 95), and illustrates an clearance operation in which third link 95 making contact with hindrance 97 is turned by clearance angle 98.

This equipment 90 detects, with clearance angle 98, the striking between third link 95 and hindrance 97, and executes a stopping process when striking is detected.

### Citation List

### Patent Literature

PTL 1
   Japanese Patent Publication No. 3757279
PTL 2
   Japanese Patent Publication No. 4756618

### Summary of Invention

### Technical Problem

As described above, in the harvesting operation of harvesting equipment 80, fruit-harvesting shear 82 is inserted to fruit bunch 16 hanging from main stem 12 to harvest fruit 13 by cutting off fruit 13 at sub-peduncle 15.

A large number of fruit bunches 16 and/or main stems 12 are densely placed in a vegetable garden when they are cultured therein. Therefore, in an actual harvesting operation, fruit 13 is harvested by inserting fruit-harvesting shear 82 to the vegetation of densely placed fruit bunches 16, main stems 12 and the like and by cutting sub-peduncle 15 with fruit-harvesting shear 82, and thereafter, fruit-harvesting shear 82 is pulled out from the vegetation and harvesting equipment 80 is moved to the next harvesting position so as to continue the harvesting operation.

At this time, when harvesting equipment 80 interfering with main stem 12 is moved without properly pulling fruit-harvesting shear 82 out of the vegetation, main stem 12 caught at fruit-harvesting shear 82 and/or manipulator 81 is also moved. As a result, in the worst case, main stem 12 might be cut off, or pulled down.

In view of this, as with equipment 90, it is necessary to provide a mechanism for detecting an angle corresponding to clearance angle 98 when main stem 13 is caught at manipulator 81 and/or fruit-harvesting shear 82 so that the worker can stop the movement of harvesting equipment 80 and eliminate the interference.

However, since fruit-harvesting shear 82 is inserted to and pulled out from the vegetation in the harvesting operation, main stem 13 is highly likely to be caught depending on the condition of the vegetation. If equipment 80 is stopped every time when main stem 13 is caught, the efficiency of the continuous harvesting is sacrificed.

An object of the present invention is to provide harvesting equipment and a harvest method which can continuously harvest the fruits of vegetables and fruits and the like in an efficient manner.

### Solution to Problem

Harvesting equipment of an embodiment of the present invention includes: a fruit-picking hand; an arm that moves the fruit-picking hand into a vegetation; a detection section that detects a magnitude and a direction of a load exerted on the fruit-picking hand or the arm; and a control section that detects occurrence of an interference between the vegetation and the fruit-picking hand or the arm and a direction of the interference based on the magnitude and the direction of the load detected by the detection section, and performs a control for eliminating the interference.

A harvest method of an embodiment of the present invention includes: detecting, by a detection section, a magnitude and a direction of a load exerted on a fruit-picking hand or an arm that moves the fruit-picking hand into a vegetation; and performing, by a control section, a control for eliminating an interference between the vegetation and the fruit-picking hand or the arm by detecting occurrence of the interference and a direction of the interference based on the magnitude and the direction of the load detected by the detecting by the detection section.

### Advantageous Effects of Invention

According to the embodiment of the present invention, the fruits of vegetables and fruits can be efficiently and continuously harvested.

### Brief Description of Drawings

FIG. 1 is a schematic view of an example of a configuration of harvesting equipment of an embodiment of the present invention;
FIG. 2 illustrates a state where the harvesting equipment is disposed on a path laid on a passage;
FIG. 3 is a schematic top view of a state where an articulated arm of a manipulator is extended into a ridge;
FIG. 4 is a flowchart of a harvesting operation performed by the harvesting equipment;
FIG. 5 is a flowchart of the harvesting operation performed by the harvesting equipment;
FIG. 6 is a flowchart of the harvesting operation performed by the harvesting equipment;
FIG. 7 is a flowchart of the harvesting operation performed by the harvesting equipment;
FIG. 8A illustrates a state where the articulated arm is located at a home position;
FIG. 8B illustrates a state where a fruit-picking hand moves toward a location between a main stem and another root;
FIG. 8C illustrates a state where a fruit-picking hand is inserted between a main stem and another root;
FIG. 8D illustrates a state where the fruit-picking hand turns toward a fruit;
FIG. 8E illustrates a state where the fruit-picking hand approaches a sub-peduncle to be cut;
FIG. 8F illustrates a state where the sub-peduncle is cut with the fruit-picking hand;
FIG. 9A illustrates a state where a main stem interferes with the articulated arm and the fruit-picking hand;
FIG. 9B illustrates a state where the articulated arm is reset to a state before the interference;
FIG. 9C illustrates a state where the harvesting equipment is moved to the extent of a maximum root-to-root distance;
FIG. 10 is a schematic view of a bearing state of a common tomato;
FIG. 11 is a schematic view of a configuration of a main part of a conventional harvesting equipment; and
FIG. 12 is a schematic view of equipment provided with a simplified structure with three joints and three links.

### Description of Embodiments

An embodiment of the present invention is described in detail below with reference to the accompanying drawings. It is to be noted that the same components are denoted with the same reference numerals, and the description thereof may be omitted.

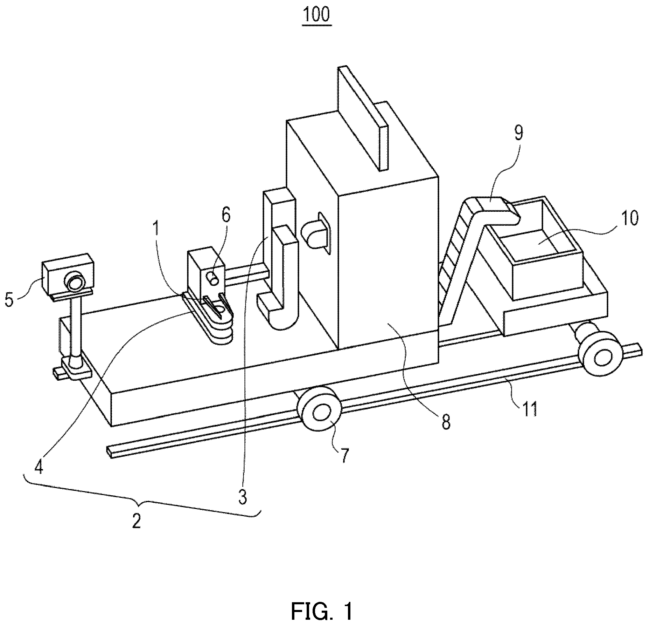

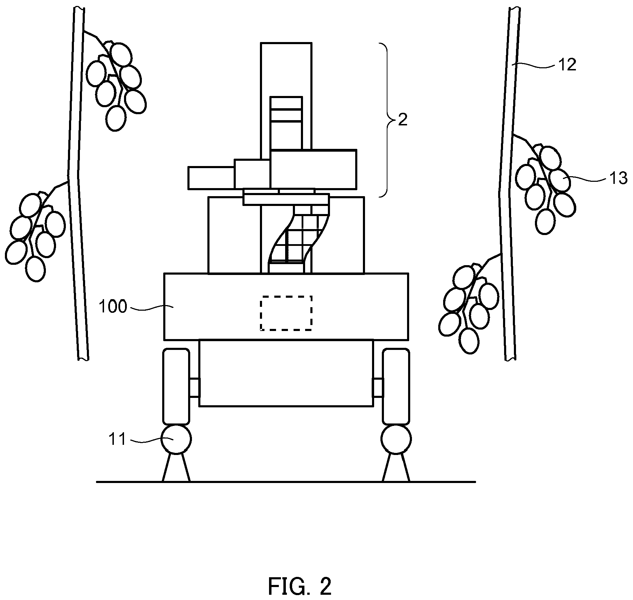

First, a harvesting equipment that is used in a harvest method of the embodiment of the present invention is described. FIG. 1 is a schematic view of an example of a configuration of harvesting equipment 100 of the embodiment of the present invention. FIG. 2 illustrates a state where harvesting equipment 100 is disposed on path 11 laid on the passage.

Harvesting equipment 100 is equipment intended for harvesting fruits of tomatoes and the like. Naturally, harvesting equipment 100 is also applicable to fruits of fruits and fruit vegetables such as eggplants and cucumbers that grow at random in the ridge and the like.

Tomatoes are cultured in alleys and facilities, and in the present embodiment, harvest of tomatoes cultured in a facility is described. In a facility, normally, passages for culturing and harvesting by workers are provided, and fruits vegetables such as tomatoes are planted in the ridges on both sides of each passage.

For example, as illustrated in FIG. 2, fruit 13 hanging down from main stem 12 bears fruit on both sides of each passage. Harvesting equipment 100 moves over path 11 between the ridges so as to perform an automatic harvesting work. Naturally, a pathless moving operation may also be performed.

Harvesting equipment 100 illustrated in FIG. 1 includes fruit-picking hand 1, manipulator 2, rough recognition camera 5, fine recognition camera 6, movement mechanism section 7, control section 8, conveyor 9, and storage section 10. Manipulator 2 includes articulated arm 4 and slide mechanism 3 that can move in the vertical direction.

With an operation of movement mechanism section 7, harvesting equipment 100 moves along path 11. Movement mechanism section 7 is a wheel that moves harvesting equipment 100, for example. Harvesting equipment 100 detects fruit 13 with rough recognition camera 5 and fine recognition camera 6, and harvests fruit 13 with fruit-picking hand 1 mounted at a tip end of manipulator 2.

To be more specific, rough recognition camera 5 takes an image of a region along ridges when harvesting equipment 100 moves over path 11 between the ridges. On the basis of the image captured by rough recognition camera 5, control section 8 moves harvesting equipment 100 to a position where fine recognition camera 6 can capture the image of the fruit of the harvesting object.

In addition, fine recognition camera 6 captures the image of the fruit of the harvesting object. On the basis of the image captured by fine recognition camera 6, control section 8 determines whether there is a fruit which should be harvested, from the three-dimensional position, color, size and the like of the fruit.

When it is determined that there is a fruit which should be harvested, control section 8 controls fruit-picking hand 1 and manipulator 2, and harvests the fruit. The harvested fruit is carried by conveyor 9 to storage section 10 and stored in storage section 10.

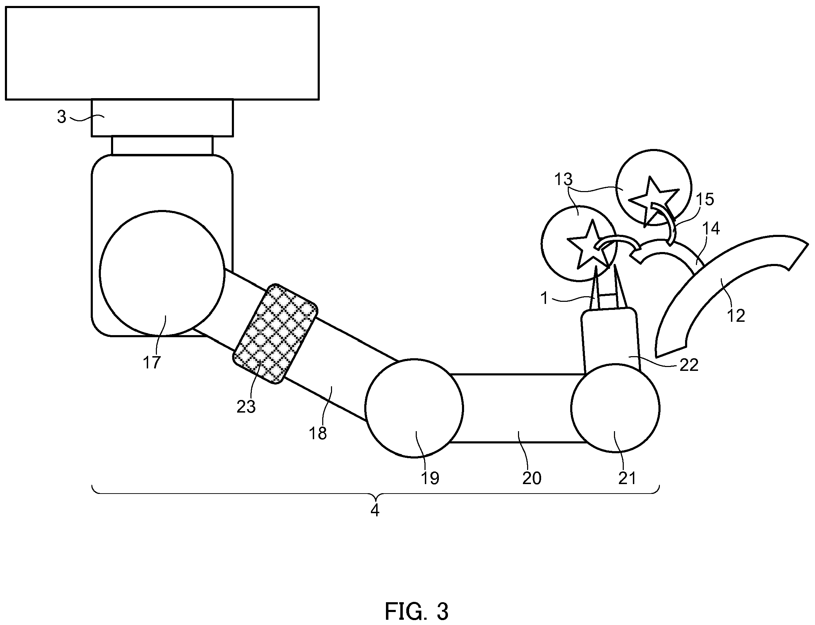

FIG. 3 is a schematic top view of a state where articulated arm 4 of manipulator 2 is extended into a ridge. It is to be noted that FIG. 3 illustrates only a part of main stem 12 in a region around fruit 13.

Articulated arm 4 includes first joint 17, second joint 19, third joint 21, first arm 18, second arm 20, third arm 22, and torque sensor 23.

With first joint 17, second joint 19, and third joint 21, articulated arm 4 can extend and fold first arm 18, second arm 20, and third arm 22.

In addition, torque sensor 23 is a detection section that detects the load and the direction of the load that is exerted on fruit-picking hand 1 or articulated arm 4. Control section 8 acquires information about the load from torque sensor 23, and, when a load of a predetermined value or greater is exerted, control section 8 determines that there is an interference between the vegetation and fruit-picking hand 1 or articulated arm 4.

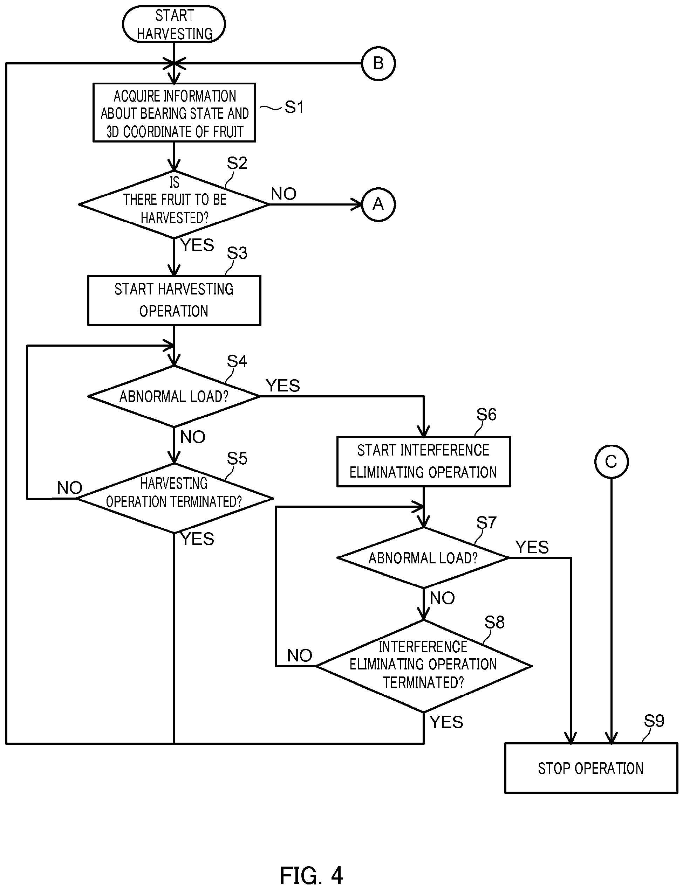

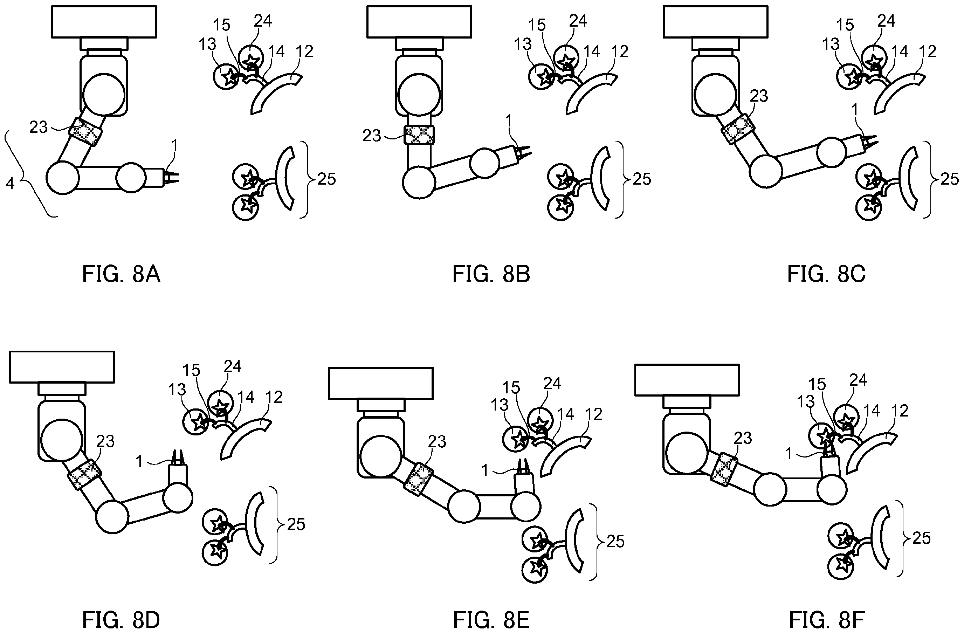

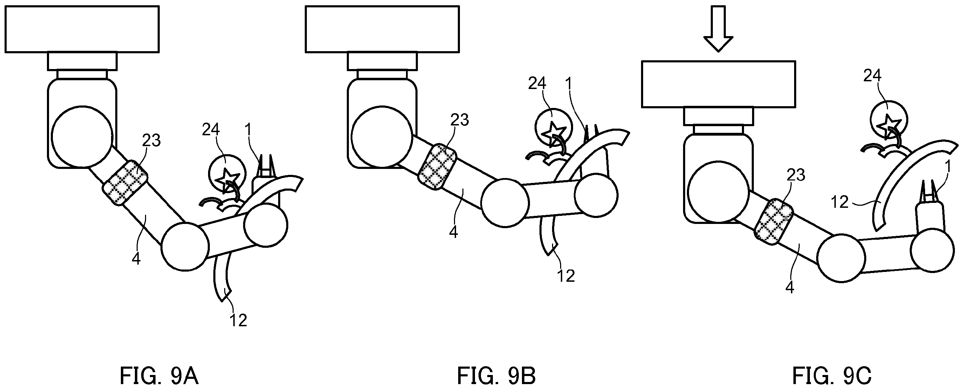

Next, a harvesting operation of harvesting equipment 100 is described. FIG. 4 to FIG. 7 are flowcharts of the harvesting operation of harvesting equipment 100. FIG. 8 illustrates the movement of articulated arm 4 during the harvesting operation. Here, FIG. 8A illustrates an exemplary home position of articulated arm 4 before a harvesting operation. FIG. 9 illustrates a state where main stem 12 interferes with articulated arm 4 and fruit-picking hand 1.

As illustrated in FIG. 4, first, control section 8 analyzes images captured by rough recognition camera 5 and fine recognition camera 6, and acquires information about the bearing state of the fruit and the three-dimensional position coordinate of the fruit (step S1).

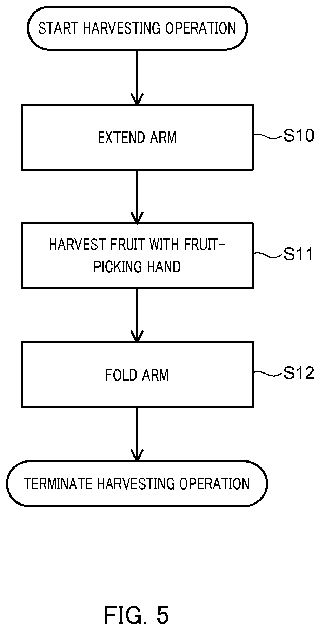

Then, on the basis of the acquired information, control section 8 determines whether there is a fruit which should be harvested (step S2). When it is determined that there is a fruit which should be harvested (YES at step S2), harvesting equipment 100 starts a harvesting operation (step S3). This harvesting operation is elaborated later with reference to FIG. 5.

Thereafter, on the basis of the load information acquired from torque sensor 23, control section 8 determines whether an abnormal load is exerted on fruit-picking hand 1 or articulated arm 4 (step S4).

When no abnormal load is exerted (NO at step S4), control section 8 determines whether harvesting operation is completed (step S5). When the harvesting operation is not completed (NO at step S5), the processes subsequent to step S4 are again executed.

When the harvesting operation is completed (YES at step S5), the processes subsequent to step S1 are again executed for other remaining fruits which have not been harvested. When the harvesting operation is not completed (NO at step S5), the harvesting operation is continued, and the processes subsequent to step S4 are executed.

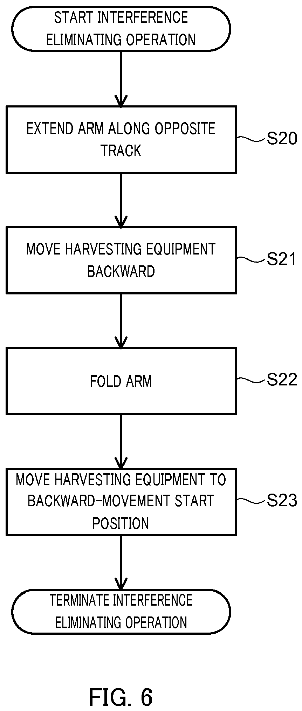

At step S4, when an abnormal load is exerted (YES at step S4), control section 8 determines that there is an interference between the vegetation and articulated arm 4 or fruit-picking hand 1, and starts an operation for eliminating the interference (step S6). The operation for eliminating the interference is elaborated later with reference to FIG. 6.

Thereafter, control section 8 determines whether an abnormal load is exerted on fruit-picking hand 1 or articulated arm 4 (step S7). When no abnormal load is exerted (NO at step S7), control section 8 determines whether the operation for eliminating the interference is completed (step S8). When the operation for eliminating the interference is not completed (NO at step S8), the operation for eliminating the interference is continued, and the processes subsequent to step S7 are again executed.

When the operation for eliminating the interference is completed (YES at step S8), the processes subsequent to step S1 are again executed for the remaining fruits which have not been harvested.

At step S7, when an abnormal load is exerted (YES at step S7), control section 8 performs a process for stopping the operation of harvesting equipment 100 (step S9). In this case, the worker eliminates the interference state.

Now the harvesting operation that is started at step S3 is elaborated with reference to FIG. 5 and FIG. 8.

In this harvesting operation, first, control section 8 extends articulated arm 4 from the home position while avoiding hindrances such as fruit 24 not to be harvested, main stem 12, peduncle 14, sub-peduncle 15, and other root 25, and places fruit-picking hand 1 at a fruit picking position in a region around fruit 13 of the harvesting object (step S10). This state is illustrated in FIG. 8A to FIG. 8E.

Here, FIG. 8A illustrates a state where articulated arm 4 is located at the home position, FIG. 8B illustrates a state where fruit-picking hand 1 moves toward a position between main stem 12 and other root 25, FIG. 8C illustrates a state where fruit-picking hand 1 is inserted between main stem 12 and other root 25, FIG. 8D illustrates a state where fruit-picking hand 1 turns to the direction of fruit 13, and FIG. 8E illustrates a state where fruit-picking hand 1 approaches sub-peduncle 15 to be cut.

Next, control section 8 controls fruit-picking hand 1 so as to harvest a fruit (step S11). This state is illustrated in FIG. 8F. Here, FIG. 8F illustrates a state where sub-peduncle 15 is cut with fruit-picking hand 1.

Thereafter, control section 8 folds articulated arm 4, and moves articulated arm 4 back to the home position illustrated in FIG. 8A (step S12). In this manner, the harvesting operation is performed.

At the time point when the harvesting is completed, hindrances such as main stem 12, fruit 24 not to be harvested, and other root 25 are present in a region around articulated arm 4 and fruit-picking hand 1. After the harvest, articulated arm 4 moves back along the harvest track of articulated arm 4 while avoiding the hindrances so as to return to the home position illustrated in FIG. 8A.

For example, in this case, articulated arm 4 moves in the states illustrated in FIG. 8F, FIG. 8E, FIG. 8D, FIG. 8C, FIG. 8B, and FIG. 8A.

However, the positions of fruit 24 not to be harvested, main stem 12, and other root 25 might be changed from their positions prior to the harvest of fruit 13 due to the contact of fruit-picking hand 1 with fruit 13 of the harvesting object, fruit 24 not to be harvested adjacent to fruit 13, or main stem 12, due to the weight balance changed by the harvest of fruit 13, and/or the like.

Therefore, interference might occur between fruit 24 not to be harvested, main stem 12 or other root 25, and articulated arm 4 or fruit-picking hand 1, and consequently articulated arm 4 or fruit-picking hand 1 might be caught.

This state is illustrated in FIG. 9A. FIG. 9A illustrates a state of interference between main stem 12, and articulated arm 4 and fruit-picking hand 1.

When articulated arm 4 is moved to the home position illustrated in FIG. 8A in this state, main stem 12 is pulled, and in the worst case, main stem 12 is cut.

In this state, the load of the reactive force generated by the caught main stem 12 is applied to articulated arm 4. Torque sensor 23 detects the magnitude and the direction of the load, to thereby detect the occurrence of an interference state and the direction of the interference.

It is to be noted that torque sensor 23 may be installed at first joint 17, second joint 19, third joint 21, first arm 18, second arm 20 and third arm 22 of articulated arm 4 illustrated in FIG. 3. In addition, the magnitude and the direction of the load may be detected from the current change of the motor that drives the arms.

Now the operation for eliminating an interference that is started at step S6 is elaborated with reference to FIG. 6 and FIG. 9.

When it is determined that an abnormal load is exerted on fruit-picking hand 1 or articulated arm 4 at step S4 of FIG. 4 (YES at step S4), control section 8 moves back articulated arm 4 along the harvest track of articulated arm 4 to reset articulated arm 4 to the state before the interference (step S20). FIG. 9B illustrates this state.

Next, control section 8 moves back harvesting equipment 100 in the direction opposite to the direction of the interference (step S21). For example, control section 8 moves harvesting equipment 100 to the extent of maximum root-to-root distance (in this example, 600 mm) until torque sensor 23 detects no interference. FIG. 9C illustrates this state.

Then, control section 8 moves back articulated arm 4 along the harvest track of articulated arm 4 so as to fold articulated arm 4, and reset articulated arm 4 to the home position illustrated in FIG. 8A(step S22).

Thereafter, control section 8 moves harvesting equipment 100 to the backward-movement start position (step S23), and terminates the operation for eliminating the interference. Thereafter, the processes subsequent to step S1 in FIG. 4 are again executed.

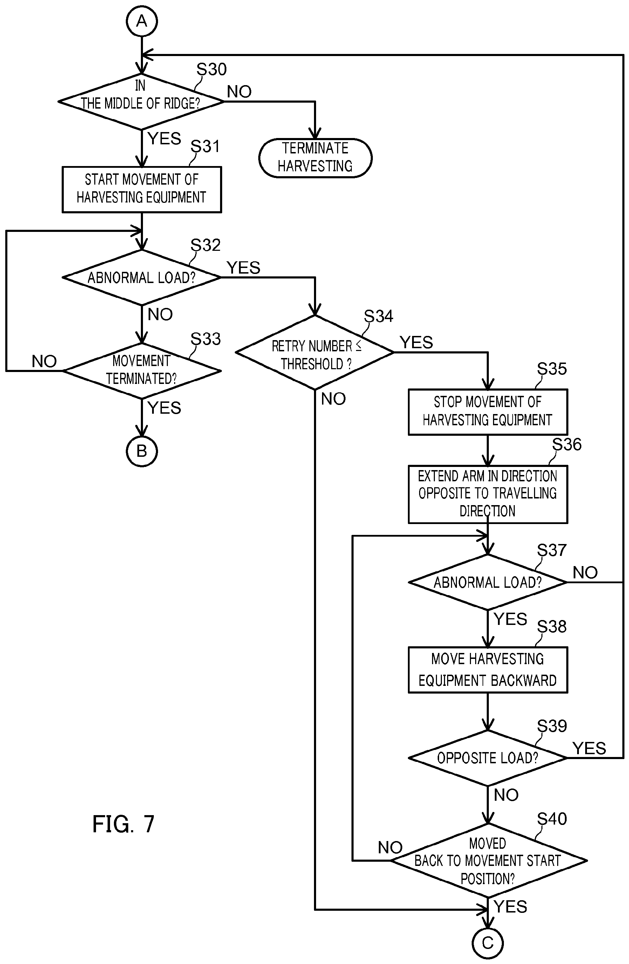

Next, a process for the case where it is determined that there is no fruit which should be harvested at step S2 of FIG. 4 (NO at step S2) is described with reference to FIG. 7.

First, control section 8 determines whether harvesting equipment 100 is located in the middle of the ridge (step S30). For example, control section 8 can detect the position of harvesting equipment 100 on the basis of the rotational frequency of the wheel of movement mechanism section 7.

When harvesting equipment 100 is located at the terminal end of the ridge, not in the middle of the ridge (NO at step S30), harvesting equipment 100 completes the harvesting operation without change. When harvesting equipment 100 is located in the middle of the ridge (YES at step S30), control section 8 starts to move harvesting equipment 100 to the next fruit harvesting position (step S31).

It is to be noted that, in some situation, when harvesting equipment 100 is moved to the next fruit harvesting position, main stem 12 or fruit 13 hanging to the course might be caught at articulated arm 4 or fruit-picking hand 1, thus causing interference. Therefore, control section 8 checks whether there is no interference by torque sensor 23 while moving harvesting equipment 100 to the next fruit harvesting position.

To be more specific, while harvesting equipment 100 is moved, control section 8 determines whether an abnormal load is exerted on fruit-picking hand 1 or articulated arm 4 from the travelling direction of harvesting equipment 100 on the basis of the load information and the information about the direction of the exerted load acquired from torque sensor 23 (step S32).

When no abnormal load is exerted (NO at step S32), control section 8 determines whether the movement of harvesting equipment 100 to the next fruit harvesting position is completed (step S33). When the movement is not completed (NO at step S33), the processes subsequent to step S32 are again executed.

When the movement is completed (YES at step S33), the processes subsequent to step S 1 illustrated in FIG. 4 are again executed at the next fruit harvesting position.

At step S32, when an abnormal load is exerted (YES at step S32), control section 8 determines whether the number (retry number) of the interference eliminating operations illustrated in step S35 and step S36 is not greater than the threshold (step S34).

When the retry number is not greater than the threshold (NO at step S34), control section 8 performs a process for stopping the operation of harvesting equipment 100 as illustrated at step S9 in FIG. 4.

When the retry number is greater than the threshold (YES at step S34), control section 8 stops the movement of harvesting equipment 100 (step S35). Then, control section 8 operates to extend articulated arm 4 in the direction opposite to the travelling direction of harvesting equipment 100 for the purpose of the operation for eliminating the interference (step S36). It is to be noted that control section 8 may operate to open and close fruit-picking hand 1 while extending articulated arm 4.

Thereafter, on the basis of the load information and the information about the direction of the exerted load acquired from torque sensor 23, control section 8 determines whether an abnormal load is exerted on fruit-picking hand 1 or articulated arm 4 from the travelling direction of harvesting equipment 100 (step S37).

When no abnormal load is exerted (NO at step S37), the processes subsequent to step S30 are again executed. When an abnormal load is exerted (YES at step S37), control section 8 moves back harvesting equipment 100 by a predetermined distance (step S38). Desirably, this distance is one-half to one-tenths of the root-to-root distance of the vegetation.

Then, on the basis of the information about the direction of the exerted load acquired from torque sensor 23, control section 8 determines whether a load in the direction opposite to the direction of the abnormal load detected at step S37 is exerted (step S39).

When a load is exerted in the opposite direction (YES at step S39), it is determined that the interference generating the abnormal load detected at step S37 is cleared, and the processes subsequent to step S30 are again executed.

When no load is exerted in the opposite direction (NO at step S39), control section 8 determines whether harvesting equipment 100 is moved back to the backward-movement start position where articulated arm 4 is extended in the direction opposite to the travelling direction to start the backward movement (step S40). For example, control section 8 can determine whether harvesting equipment 100 is moved back to the backward-movement start position on the basis of the rotational frequency of the wheel of movement mechanism section 7.

When harvesting equipment 100 is not moved back to the backward-movement start position (NO at step S40), the processes subsequent to step S37 are again executed. When harvesting equipment 100 is moved back to the backward-movement start position (YES at step S40), control section 8 performs a process for stopping the operation of harvesting equipment 100 as illustrated at step S9 in FIG. 4.

Through the above-mentioned operations, harvesting equipment 100 harvests the fruits while moving in the ridge. Then, harvesting equipment 100 performs the harvesting operation such that the interference with the vegetation is minimized, and, even when the interference occurs, harvesting equipment 100 detects the interference so as to perform a proper operation for eliminating the interference in accordance with the operation state of harvesting equipment 100.

That is, harvesting equipment 100 can avoid by itself the interference that damages the vegetation, and can eliminate the interference even when the interference occurs, thus making it possible to continue the harvesting operation.

Accordingly, it is possible to avoid a task of the worker of stopping the harvesting equipment every time when interference occurs, and going to the location of the interference to eliminate the interference. As a result, a continuous harvesting operation of harvesting equipment 100 can be expected without wasting the man hours of the worker.

According to the embodiment of the present invention, the fruits of vegetables and fruits can be efficiently and continuously harvested.

### Industrial Applicability

The harvesting equipment and the harvest method according to the embodiment of the present invention are applicable to harvesting equipment and a harvest method for harvesting fruits of vegetables or fruits.

### Reference Signs List

1 Fruit-picking hand
2 Manipulator
3 Slide mechanism
4 Articulated arm
5 Rough recognition camera
6 Fine recognition camera
7 Movement mechanism section
8 Control section
9 Conveyor
10 Storage section
11 Path
12 main stem
13 Fruit
14 Peduncle
15 Sub-peduncle
16 Fruit bunch
17 First joint
18 First arm
19 Second joint
20 Second arm
21 Third joint
22 Third arm
23 Torque sensor
24 Fruit not to be harvested
25 Other root
80 Harvesting equipment
81 Manipulator
82 Fruit-harvesting shear
83 Travelling vehicle
90 Equipment
91 First link
92 First joint
93 Second link
94 Second joint
95 Third link
96 Third joint
97 Hindrance
98 Clearance angle
100 Harvesting equipment

## Claims

1. Harvesting equipment comprising:
a fruit-picking hand;
an arm that moves the fruit-picking hand into a vegetation;
a detection section that detects a magnitude and a direction of a load exerted on the fruit-picking hand or the arm; and
a control section that detects occurrence of an interference between the vegetation and the fruit-picking hand or the arm and a direction of the interference based on the magnitude and the direction of the load detected by the detection section, and performs a control for eliminating the interference.

2. The harvesting equipment according to claim 1, wherein the control section performs the control for eliminating the interference by moving the arm along a path of a harvesting operation of the arm in a direction opposite to a direction of the harvesting operation.

3. The harvesting equipment according to claim 1, wherein the control section performs the control for eliminating the interference by changing an orientation of the arm based on the magnitude and the direction of the load detected by the detection section.

4. The harvesting equipment according to claim 1, wherein the control section performs the control for eliminating the interference by moving the harvesting equipment based on the magnitude and the direction of the load detected by the detection section.

5. The harvesting equipment according to claim 4, wherein when the harvesting equipment is moved, the harvesting equipment is moved backward by a predetermined distance.

6. A harvest method comprising:
detecting, by a detection section, a magnitude and a direction of a load exerted on a fruit-picking hand or an arm that moves the fruit-picking hand into a vegetation; and
performing, by a control section, a control for eliminating an interference between the vegetation and the fruit-picking hand or the arm by detecting occurrence of the interference and a direction of the interference based on the magnitude and the direction of the load detected by the detecting by the detection section.

7. The harvest method according to claim 6, wherein the performing the control for eliminating the interference is moving the arm along a path of a harvesting operation of the arm in a direction opposite to a direction of the harvesting operation.

8. The harvest method according to claim 6, wherein the performing the control for eliminating the interference is changing an orientation of the arm based on the magnitude and the direction of the load detected by the detection section.

9. The harvest method according to claim 6, wherein the performing the control for eliminating the interference is moving a harvesting equipment based on the magnitude and the direction of the load detected by the detection section.

10. The harvest method according to claim 9, wherein the moving the harvesting equipment is moving backward the harvesting equipment by a predetermined distance.
